(19) Europäisches Patentamt
European Patent Office
Office européen des brevets

(11) EP 4 160 056 A1

(12) EUROPEAN PATENT APPLICATION
published in accordance with Art. 153(4) EPC

(43) Date of publication:
05.04.2023 Bulletin 2023/14

(51) International Patent Classification (IPC):
F16J 15/10 (2006.01)

(21) Application number: 21814537.3

(22) Date of filing: 10.05.2021

(52) Cooperative Patent Classification (CPC):
F16J 15/10

(86) International application number:
PCT/JP2021/017708

(87) International publication number:
WO 2021/241186 (02.12.2021 Gazette 2021/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.05.2020 JP 2020093590

(71) Applicant: NOK Corporation
Minato-ku
Tokyo 105-8585 (JP)

(72) Inventors:
• OGATA, Chiyota
Aso-shi, Kumamoto 869-2231 (JP)
• USHIJIMA, Shinji
Aso-shi, Kumamoto 869-2231 (JP)
• MIKI, Yohei
Aso-shi, Kumamoto 869-2231 (JP)

(74) Representative: TBK
Bavariaring 4-6
80336 München (DE)

(54) SEALING DEVICE

(57) A sealing property is improved.

A sealing device (1) is formed of an endless elastic body around an axis line (x). The sealing device (1) is mounted in an endless space (S) formed by a plurality of members (100, 101) facing each other so as to perform sealing between one side (c) and the other side (d) in the radial direction of the space (S). The sealing device (1) includes a main body portion (11) facing the plurality of members (100, 101) in the axis line (x) direction, projecting portions (13) on one side projecting from the main body portion (11) toward the one side (c) in the radial direction to face the plurality of members (100, 101), and projecting portions (14) on the other side projecting from the main body portion (11) toward the other side (d) in the radial direction to face the plurality of members (100, 101). A projecting amount of each projecting portion (14) on the other side toward the other side (d) in the radial direction is greater than a projecting amount of each projecting portion (13) on one side toward the one side (c) in the radial direction.

FIG. 3

EP 4 160 056 A1

# Description

Technical Field

The present invention relates to a sealing device, and particularly relates to a sealing device that exhibits high sealability in use under a low temperature environment.

Background Art

As a sealing material to prevent leakage of a liquid such as water and oil or a fluid such as gas, or to prevent entry of foreign objects such as dirt and dust, a sealing device represented by a gasket has conventionally been used. Such a gasket is mounted in a groove portion as an endless space formed by a plurality of members facing each other so as to perform sealing between an inner periphery side and an outer periphery side of the groove portion.

The gasket includes, on a cross-section of a main body portion facing a plurality of members, projections projecting in a direction (transverse direction) perpendicular to the longitudinal direction of the endless shape so as to contact the groove portion. The projections prevent the gasket from falling inside the groove portion and dropping from the groove portion. As a gasket including such projections, an endless gasket is disclosed that is mounted in a groove portion engraved in one member and that performs sealing between the member and the other member when the two members are engaged (see, for example, Patent Literature 1).

Document List

Patent Literature

Patent Literature 1: Japanese Patent Application Publication No. 2005-299686

Summary of Invention

Technical Problem

However, when the conventional gasket including the projections in the main body portion is mounted in the groove portion in a usage state, the pressure applied to the gasket occasionally changes, particularly in cases in which the temperature is low or the like. In such a case, since in the conventional gasket, the projections projecting toward the outer periphery side that is in the direction in which the pressure is exerted deform and the main body portion lying between the projections is not supported, it is considered that the main body portion also deforms to thus change the sealing property. Therefore, there has been a demand for further improvement in the sealing property of the gasket considering the change in the pressure.

The present invention has been made in view of the aforementioned problem, and it is an object of the present invention to provide a sealing device capable of improving the sealing property.

Solution to Problem

To achieve the aforementioned object, a sealing device according to the present invention is formed of an endless elastic body around an axis line and is mounted in an endless space formed by a plurality of members facing each other so as to perform sealing between one side and the other side in a radial direction of the endless space, and includes: a main body portion facing the plurality of members in an axis line direction; a projecting portion on one side projecting from the main body portion toward one side in the radial direction to face the plurality of members; and a projecting portion on the other side projecting from the main body portion toward the other side to face the plurality of members, in which a projecting amount of the projecting portion on the other side toward the other side is greater than a projecting amount of the projecting portion on one side toward the one side.

The sealing device according to one aspect of the present invention performs sealing between a space on one side formed on the one side and a space on the other side formed on the other side, and the projecting portions on one side project toward the one side that is in a direction in which a pressure applied due to a medium present in the space on the other side is exerted, and the projecting portions on the other side project toward the other side that is in a direction opposite to the direction in which the pressure is exerted.

In the sealing device according to one aspect of the present invention, when the projecting amount of the projecting portion on the other side toward the other side is a and the projecting amount of the projecting portion on one side toward the one side is b, $0 < b/a < 1$ is satisfied.

In the sealing device according to one aspect of the present invention, a center line in the radial direction of the main body portion inside the endless space is positioned on the one side relative to a center line in the radial direction of the endless space.

In the sealing device according to one aspect of the present invention, when a distance between the center line in the radial direction of the endless space and the center line in the radial direction of the main body portion inside the endless space is l and a distance from the center line in the radial direction of the endless space to the center line in the radial direction of the main body portion in a case where the main body portion extends along an end portion on one side in the radial direction of the endless space is lo, $0 < l/lo < 1$ is satisfied.

Effects of Invention

With a sealing device according to the present invention, the sealing property can be improved.

Brief Description of Drawings

[Fig. 1] A plan view to show a schematic configuration of a gasket according to a first embodiment of a sealing device of the present invention.
[Fig. 2] (a) A cross-sectional view taken along A-A, and (b) a cross-sectional view taken along B-B, of the gasket shown in Fig. 1.
[Fig. 3] A cross-sectional view of the gasket shown in Fig. 1 in a usage state.
[Fig. 4] A cross-sectional view of a gasket according to a reference example in a usage state.
[Fig. 5] A cross-sectional view of a gasket according to another reference example in a usage state.
[Fig. 6] A cross-sectional view of the gasket shown in Fig. 1 in a usage state, showing projecting amounts of a projecting portion on one side and a projecting portion on the other side, and a center line in a radial direction of a main body portion and a center line in a radial direction of a groove portion.
[Fig. 7] A cross-sectional view of the gasket shown in Fig. 1 in a usage state.
[Fig. 8] A cross-sectional view of the gasket shown in Fig. 7 in a usage state, showing projecting amounts of the projecting portion on one side and the projecting portion on the other side, and the center line in the radial direction of the main body portion and the center line in the radial direction of the groove portion.
[Fig. 9] A cross-sectional view of a gasket taken along A-A according to a second embodiment of the sealing device of the present invention.
[Fig. 10] A cross-sectional view of the gasket taken along B-B according to the second embodiment.
[Fig. 11] A cross-sectional view of a gasket according to a reference example of the second embodiment in a usage state.

Description of Embodiments

Hereinafter, embodiments of the present invention will be described with reference to the drawings.

[First embodiment]

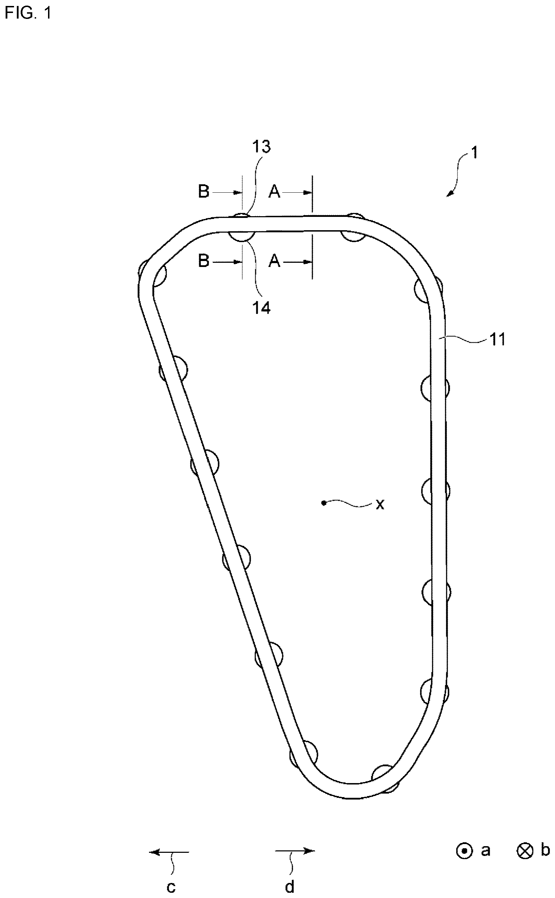

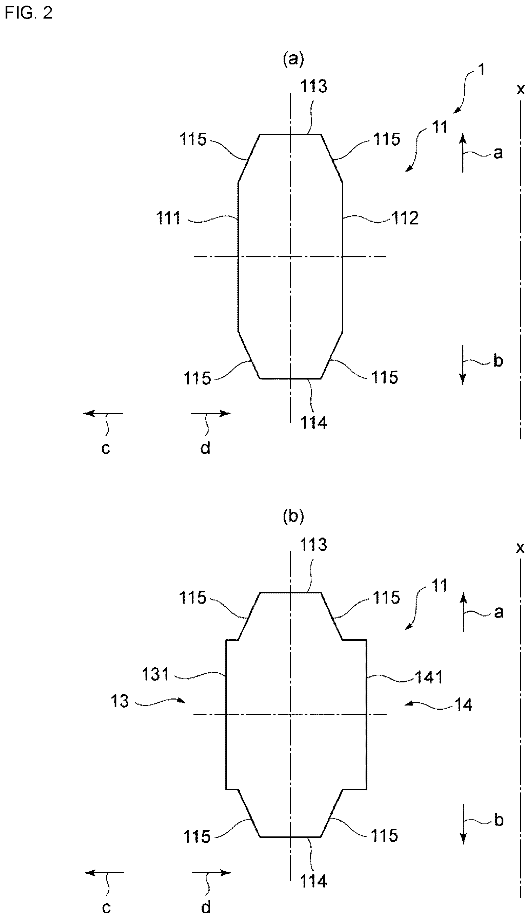

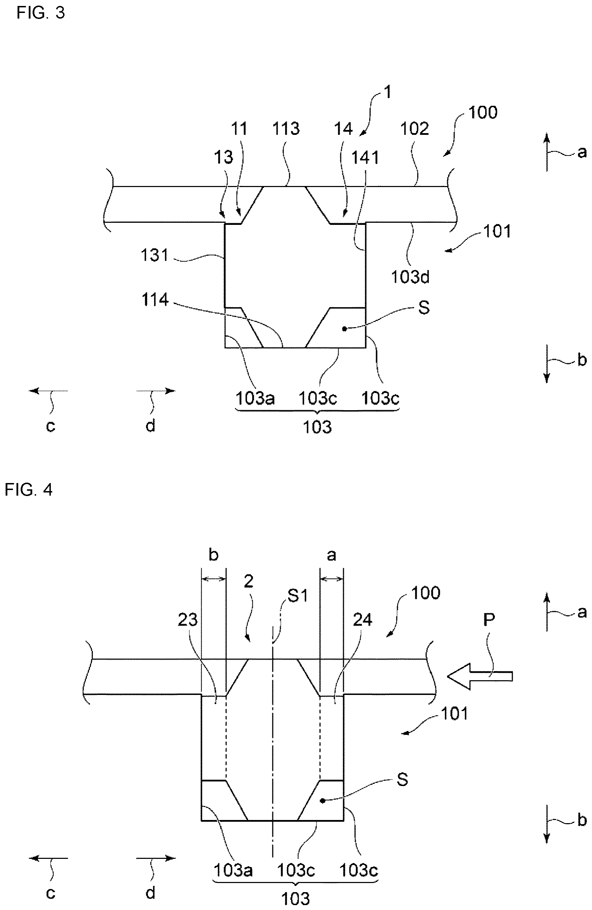

Fig. 1 is a plan view to show a schematic configuration of a gasket 1 according to a first embodiment of a sealing device of the present invention. In Fig. 2, (a) is a cross-sectional view taken along A-A, and (b) is a cross-sectional view taken along B-B, of the gasket 1. Fig. 3 is a cross-sectional view of the gasket 1 in a usage state.

Hereinafter, for convenience in explanation, a direction of an arrow a (see Figs. 2 and 3) in an axis line x direction is defined as an upper side. Further, a direction of an arrow b (see Figs. 2 and 3) in the axis line x direction is defined as an inner side. In a direction perpendicular to the axis line x (hereinafter also referred to as the "radial direction"), a direction moving away from the axis line x (direction of an arrow c of Figs. 2 and 3) is defined as one side in the radial direction. One side in the radial direction is an outer periphery side unless otherwise explained. Further, a direction approaching the axis line x (direction of an arrow d of Fig. 2) is defined as the other side in the radial direction. The other side in the radial direction is an inner periphery side unless otherwise explained. In the following descriptions, when the positional relations among the members and the directions are described using an upper side or a lower side, the positional relations and directions only refer to the positional relations and directions in the drawings and do not indicate the positional relations and directions when the members are actually assembled in a vehicle or the like.

As shown in Fig. 1 to Fig. 3, the gasket 1 according to the first embodiment is formed of an endless elastic body around the axis line x. The gasket 1 is mounted in an endless space S formed by a plurality of members 100 and 101 facing each other so as to perform sealing between one side c and the other side d in the radial direction of the space S. The gasket 1 includes a main body portion 11 facing the plurality of members 100 and 101 in the axis line x direction, projecting portions 13 on one side projecting from the main body portion 11 toward the one side c in the radial direction to face the plurality of members 100 and 101, and projecting portions 14 on the other side projecting from the main body portion 11 toward the other side d in the radial direction to face the plurality of members 100 and 101. A projecting amount of each of the projecting portions 14 on the other side toward the other side d in the radial direction is greater than a projecting amount of each of the projecting portions 13 on one side toward the one side c in the radial direction. Hereinafter, the gasket 1 will be specifically described.

As shown in Fig. 1, the gasket 1 is formed in a generally endless (annular) shape in a plan view. The main body portion 11 is formed in an outline shape of the aforementioned endless gasket 1. A plurality of projecting portions 13 on one side is provided on an outer periphery side c of the main body portion 11 at given intervals. Further, a plurality of projecting portions 14 on the other side are provided on an inner periphery side d of the main body portion 11 at the same intervals as the intervals of the projecting portions 13 on one side. The projecting portions 13 on one side and the projecting portions 14 on the other side are each formed in, for example, a semi-circular arc or a substantially semi-circular arc shape in a plan view. Note that the shape of the main body portion 11 in a plan view is not limited to the shape shown in Fig.

1 as long as the shape is endless. Further, the shapes of the projecting portions 13 on one side and the projecting portions 14 on the other side in a plan view are not limited to the aforementioned shape, either.

The gasket 1 is, for example, mounted in cells stacked in multiple layers of a battery mounted in a fuel cell vehicle or an electric vehicle. The gasket 1 is an example of a sealing device used as a sealing material for sealing a fuel gas, an oxidant gas, or the like generated inside the battery. The gasket 1 is mounted in a groove portion 103 forming the endless space S formed by the plurality of members 100 and 101 facing each other so as to perform sealing between the outer periphery side c and the inner periphery side d of the groove portion 103. In other words, the gasket 1 performs sealing between a space on one side formed on the outer periphery side c and a space on the other side formed on the inner periphery side d.

As shown in Fig. 3, specifically, the gasket 1 is attached to the endless space S to become a usage state. The space S is, for example, an endless space around the axis line x formed by the member 100 and the member 101 joined to the member 100 in a vertical direction. The endless groove portion 103 is formed on a surface on an upper side a of the member 101. The groove portion 103 is defined by an outer peripheral wall surface 103a, a bottom surface portion 103b, and an inner peripheral wall surface 103c. The outer peripheral wall surface 103a is provided in an end portion on the outer periphery side c of the groove portion 103. The outer peripheral wall surface 103a endlessly extends in the axis line x direction and has a cross-sectional shape in a planar or a substantially planar shape along the axis line x. The bottom surface portion 103b extends from an end portion on a lower side b of the outer peripheral wall surface 103a toward the inner periphery side d. Further, the bottom surface portion 103b is a planar surface parallel to or substantially parallel to a planar surface in a direction perpendicular to the axis line x. The inner peripheral wall surface 103c is provided in an end portion on the inner periphery side d of the groove portion 103. The inner peripheral wall surface 103c is a surface extending from the end portion on the inner periphery side d of the bottom surface portion 103b toward the upper side a. Further, the inner peripheral wall surface 103c endlessly extends in the axis line x direction and has a cross-sectional shape in a planar or a substantially planar shape along the axis line x.

An endless planar surface of a joint surface portion 102 on the lower side b of the member 100, which faces the bottom surface portion 103b as a lower side sealing surface of the member 101, is an upper side sealing surface. The space S is an annular space defined by the joint surface portion 102 as the aforementioned outer side sealing surface, the outer peripheral wall surface 103a, the bottom surface portion 103b as an inner side sealing surface, and the inner peripheral wall surface 103c. The gasket 1 is attached to the space S and seals the space S, so as to perform sealing between the inner periphery side d and the outer periphery side c that divide the space S.

As shown in Fig. 2(a) and Fig. 2(b), the main body portion 11 is formed so as to have a cross-sectional shape in the radial direction in an octagonal or a substantially octagonal shape. The main body portion 11 includes a surface 111 on one side, a surface 112 on the other side, an upper surface portion 113, a lower surface portion 114, and an oblique side portion 115.

The surface 111 on one side is formed annularly about the axis line x on the outer periphery side c of the gasket 1. The surface 111 on one side has a cross-sectional shape in a planar or a substantially planar shape along the axis line x. As shown in Fig. 3, the surface 111 on one side faces, in a usage state, the outer peripheral wall surface 103a of the groove portion 103 formed in the member 101. In other words, the surface 111 on one side has a shape along the outer peripheral wall surface 103a that is the outer peripheral surface of the member 101 forming the annular space S in a usage state.

As shown in Fig. 2(a) and Fig. 2(b), the surface 112 on the other side is formed annularly about the axis line x on the inner periphery side d of the gasket 1. The surface 112 on the other side has a cross-sectional shape in a planar or a substantially planar shape along the axis line x. As shown in Fig. 3, the surface 112 on the other side faces, in a usage state, the inner peripheral wall surface 103c of the groove portion 103 formed in the member 101. In other words, the surface 112 on the other side has a shape along the inner peripheral wall surface 103c that is the inner peripheral surface of the member 101 forming the annular space S in a usage state.

As shown in Fig. 2(a) and Fig. 2(b), the upper surface portion 113 is formed annularly about the axis line x on the upper side a of the gasket 1. The upper surface portion 113 has a cross-sectional shape in a planar or a substantially planar shape along a surface perpendicular to the axis line x. As shown in Fig. 3, the upper surface portion 113 faces, in a usage state, the joint surface portion 102 formed in the member 100. The upper surface portion 113 has a shape along the joint surface portion 102 of the member 100 forming the annular space S in a usage state. The joint surface portion 102 forms an upper side sealing surface 102a.

As shown in Fig. 2(a) and Fig. 2(b), the lower surface portion 114 is formed annularly about the axis line x on the lower side b of the gasket 1. The lower surface portion 114 has a cross-sectional shape in a planar or a substantially planar shape along a surface perpendicular to the axis line x, namely, a surface parallel to the upper surface portion 113. As shown in Fig. 3, the lower surface portion 114 faces, in a usage state, the joint surface portion 102 of the groove portion 103 formed in the member 101. In other words, the upper surface portion 113 has a shape along the bottom surface portion 103b of the member 101 forming the annular space S in a usage state. The bottom surface portion 103b forms a lower side sealing surface 103d.

As shown in Fig. 2(b), the projecting portion 13 on one side projects toward one side (outer periphery side c) in the radial direction that is in the direction in which the pressure applied due to a medium present in the space on the other side is exerted, for example, a fuel gas and an oxidant gas generated inside the battery. The projecting portion 13 on one side is formed annularly about the axis line x on the outer periphery side c of the gasket 1. In the projecting portion 13 on one side, a side surface portion 131 has a cross-sectional shape in a planar or a substantially planar shape along the axis line x. As shown in Fig. 3, in the projecting portion 13 on one side, in a usage state, the side surface portion 131 faces the outer peripheral wall surface 103a of the groove portion 103 formed in the member 101. In other words, the side surface portion 131 of the projecting portion 13 on one side has a shape along the outer peripheral wall surface 103a that is the outer peripheral surface of the member 101 forming the annular space S in a usage state.

As shown in Fig. 2(b), the projecting portion 14 on the other side projects toward the other side (inner periphery side d) in the radial direction that is a direction opposite to the direction in which the pressure is exerted. The projecting portion 14 on the other side is formed annularly about the axis line x on the inner periphery side d of the gasket 1. In the projecting portion 14 on the other side, a side surface portion 141 has a cross-sectional shape in a planar or a substantially planar shape along the axis line x. As shown in Fig. 3, in the projecting portion 14 on the other side, in a usage state, the side surface portion 141 faces the inner peripheral wall surface 103c of the groove portion 103 formed in the member 101. In other words, the side surface portion 141 of the projecting portion 14 on the other side has a shape along the inner peripheral wall surface 103c that is the inner peripheral surface of the member 101 forming the annular space S in a usage state.

Thereafter, projecting amounts of the projecting portion 13 on one side and the projecting portion 14 on the other side of the gasket 1 will be described.

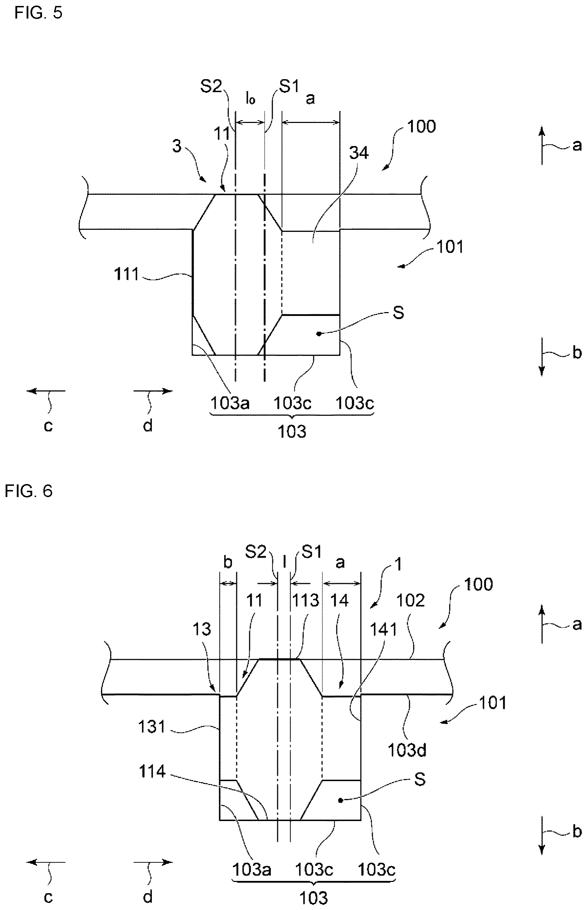

Fig. 4 is a cross-sectional view of a gasket 2 according to a reference example in a usage state. Fig. 5 is a cross-sectional view of a gasket 3 according to another reference example in a usage state. As shown in Fig. 4, the gasket 2 according to the reference example differs from the gasket 1 in that a projecting amount b of a projecting portion 23 on one side and a projecting amount a of a projecting portion 24 on the other side are equivalent. As shown in Fig. 5, the gasket 3 of another reference example only has a projecting portion 34 on the other side and does not have the projecting portion 13 or 23 on one side as in the gaskets 1 and 2.

When the gasket 2 shown in Fig. 4 is mounted in the groove portion 103 in a usage state and in a case where the pressure to be applied to the gasket 2 changes, particularly when the temperature is low or the like, since the projecting amount b of the projecting portion 23 on one side projecting toward the outer periphery side d that is in the direction indicated by an arrow P in which the pressure is exerted, is large, the amount of deformation of the projecting portion 23 on one side is also large. It is considered that in the gasket 2, the deformation of the projecting portion 23 on one side could also deform the main body portion 11, thereby changing the sealing property.

The gasket 3 shown in Fig. 5 does not have the projecting portion 23 on one side as in the gasket 2, and the surface 111 on one side of the main body portion 11 faces and contacts the outer peripheral wall surface 103a also in the position where the projecting portion 24 on the other side is provided. Therefore, when the gasket 3 is mounted in the groove portion 103 in a usage state and even in a case where the pressure applied to the gasket 3 changes, since there is no projecting portion 23 on one side on the outer periphery side d that is in the direction indicated by the arrow P in which the pressure is exerted, the deformation of the main body portion 11 is suppressed, so that the sealing property is maintained.

In the meantime, the gasket 2 is designed, considering facilitating mounting in the groove portion 103, such that a center line of the main body portion 11 is positioned near a center portion of the groove portion 103 indicated by a center line S1. However, since the gasket 3 is not provided with a projection on the outer periphery side, a center line S2 of the main body portion 11 is distanced from the center line S1 of the groove portion 103 by a distance lo. Therefore, when the gasket 3 is in a complicated planar shape as shown in Fig. 1 other than a circular shape, the perimeter in mounting is extended, which makes it difficult to perform proper mounting in the groove portion 103. In other words, the gasket 3 is required to improve the easiness in mounting in the groove portion 103.

Herein, in the gaskets 2 and 3, when the relation between the projecting amount a of the projecting portion 14 on the other side toward the other side d in the radial direction and the projecting amount b of the projecting portion on one side toward the one side is summarized, the gasket 2 is defined by the following expression (1) and the gasket 3 is defined by the following expression (2).

$$b/a = 1 \ ... \ (1)$$

$$b/a = 0 \ ... \ (2)$$

Fig. 6 is a cross-sectional view of the gasket 1 in a usage state, showing the projecting amount b of the projecting portion 13 on one side and the projecting amount a of the projecting portion 14 on the other side, and the distance l between the center line in the radial direction of the main body portion 11 and the center line in the radial direction of the groove portion 103.

As shown in Fig. 6, as described above, the gasket 1 includes the projecting portion 13 on one side projecting from the main body portion 11 toward the one side c in the radial direction and the projecting portion 14 on the other side projecting from the main body portion 11 toward the other side d in the radial direction. The projecting amount a of the projecting portion 14 on the other side toward the other side d in the radial direction is greater than the projecting amount b of the projecting portion 13 on one side toward the one side c in the radial direction.

Based on the aforementioned expressions (1) and (2), in the gasket 1, the relation between the projecting amount a of the projecting portion 14 on the other side toward the other side d in the radial direction and the projecting amount b of the projecting portion 13 on one side toward the one side c in the radial direction only needs to satisfy the following expression (3).

$$0 < b/a < 1 \ldots (3)$$

Thereafter, the position of the main body portion 11 in the radial direction inside the groove portion 103 in the gasket 1 will be described.

In the gaskets 1, 2, and 3, the distance between the center line S1 in the radial direction of the groove portion 103 and the center line S2 in the radial direction of the main body portion 11 inside the groove portion 103 is 1. Further, in the gasket 2, the distance between the center line S1 in the radial direction of the groove portion 103 and the center line S2 in the radial direction of the main body portion 11 inside the groove portion 103 is lo. The lo is equivalent to the distance from the center line S1 of the groove portion 103 to the center line S2 in the radial direction of the main body portion 11 in a case where the main body portion 11 of the gasket 1 extends along the outer peripheral wall surface 103a that is an end portion on one side in the radial direction of the groove portion 103.

Note that the lo is the same as the difference among the center line S1 in the radial direction of the groove portion 103, the center line S2 in the radial direction of the main body portion 11 inside the groove portion 103, and the projecting amount b of the projecting portion on the other side toward the other side in the radial direction of the gasket 1.

As shown in Fig. 4, in the gasket 2, since the projecting amount b of the projecting portion 23 on one side and the projecting amount a of the projecting portion 24 on the other side are equivalent, the center line S2 of the main body portion 11 is positioned near the center portion of the groove portion 103 indicated by the center line S1. In other words, in the gasket 2, the relation between the distance l and the distance lo is defined by the following expression (4).

$$l/lo = 0 \ldots (4)$$

Further, as shown in Fig. 5, in the gasket 3, the center line S2 of the main body portion 11 is distanced from the center line S1 of the groove portion 103 by the distance lo. Since the gasket 3 does not have a projecting portion on one side, the distance l and the distance lo are equivalent. Therefore, the relation between the distance l and the distance lo of the gasket 3 is defined by the following expression (5).

$$l/lo = 1 \ldots (5)$$

Meanwhile, in the gasket 1, the center line S2 in the radial direction of the main body portion 11 inside the groove portion 103 is positioned on the one side c in the radial direction relative to the center line S1 in the radial direction of the groove portion 103. In the gasket 1, the center line S2 is positioned on the one side c in the radial direction only by a difference between the projecting amount b of the projecting portion 14 on the other side toward the other side in the radial direction and the projecting amount a of the projecting portion 13 on one side.

Based on the aforementioned expressions (4) and (5), the relation between the distance l and the distance lo in the gasket 1 only needs to satisfy the following expression (6).

$$0 < l/lo < 1 \ldots (6)$$

As described above, according to the gasket 1 of the first embodiment of the present invention, the projecting amount of the projecting portion 14 on the other side toward the other side d in the radial direction is greater than the projecting amount of the projecting portion 13 on one side toward the one side c in the radial direction. Since the gasket 1 is configured as such, when the gasket 1 is mounted in the groove portion 103 in a usage state, the deformation of the projecting portion 13 on one side projecting in the direction in which the pressure is exerted is suppressed to thus suppress the deformation of the main body portion 11, so that the sealing property can be maintained.

Further, in the gasket 1, since the projecting portion 13 on one side and the projecting portion 14 on the other side are provided, even when the planar shape is a complicated shape as shown in Fig. 1 other than a circular shape, the proper mounting in the groove portion 103 can be performed. Therefore, the gasket 1 can improve the easiness in mounting in the groove portion 103.

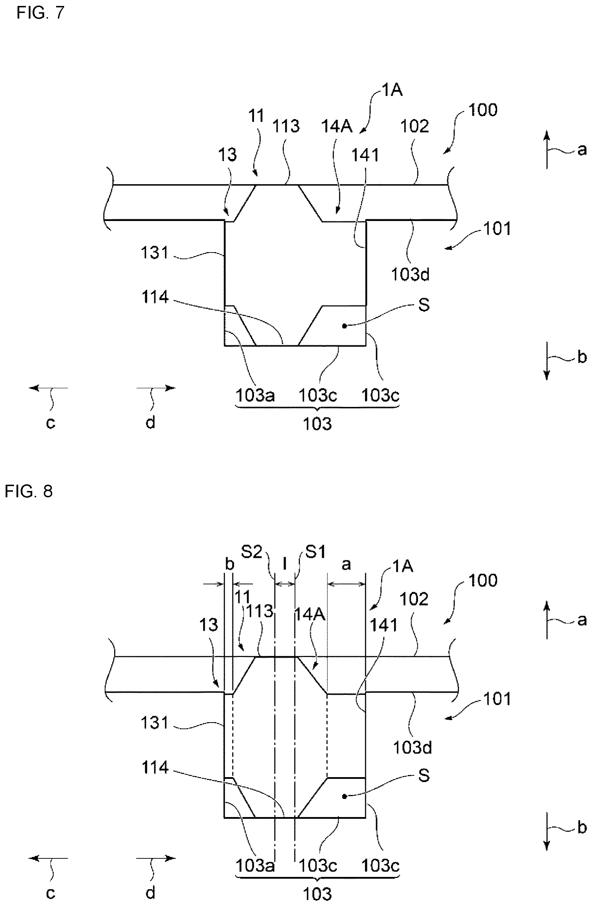

Fig. 7 is a cross-sectional view of a gasket 1A as a modification in a usage state. Fig. 8 is a cross-sectional view of the gasket 1A in a usage state, showing projecting amounts of a projecting portion 13A on one side and a projecting portion 14A on the other side, and the center line in the radial direction of the main body portion 11 and the center line in the radial direction of the groove portion 103.

In the sealing device according to the present invention, the relations between the projecting amounts of the projecting portion on one side and the projecting portion on the other side and between the center line in the radial direction of the main body portion and the center line in the radial direction of the groove portion are not limited to the relations in the gasket 1 described above, but may be the relations shown in Fig. 7 and Fig. 8.

[Second embodiment]

Thereafter, a gasket 1B according to a second embodiment of the present invention will be described. Hereinafter, the components having the same or similar functions as the functions of the gasket 1 according to the aforementioned first embodiment are assigned the same reference numerals and the descriptions will be omitted, and only the different components will be described.

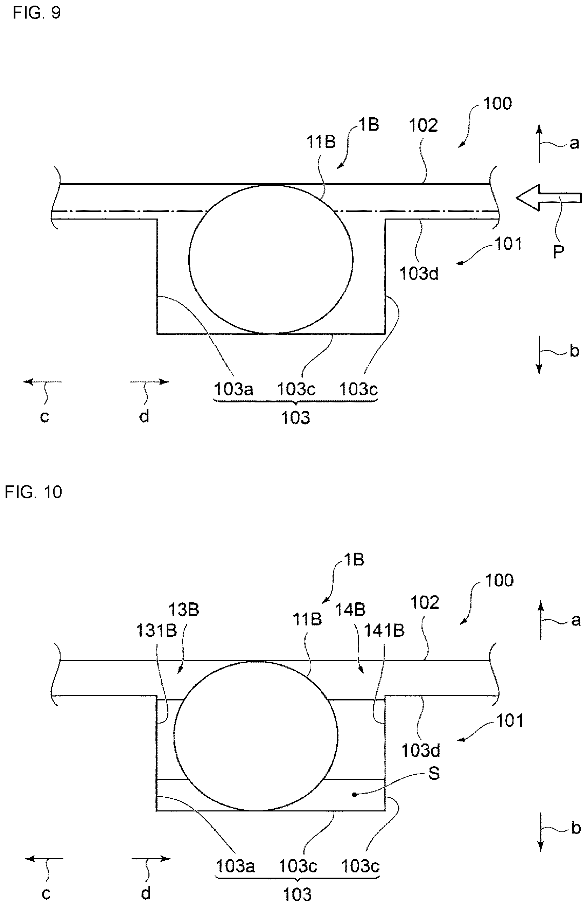

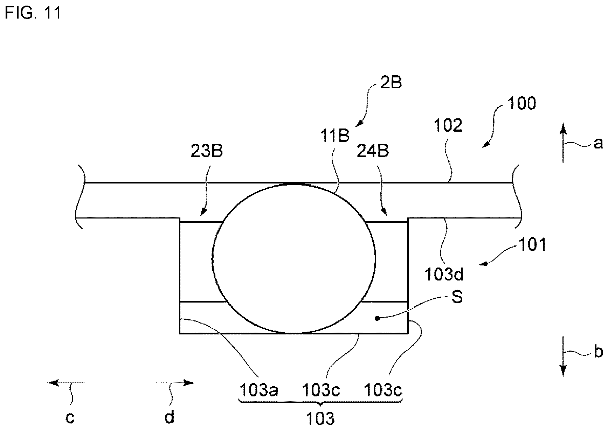

Fig. 9 is a cross-sectional view of the gasket 1B taken along A-A according to the second embodiment of the present invention. Further, Fig. 10 is a cross-sectional view of the gasket 1B taken along B-B. Furthermore, Fig. 11 is a cross-sectional view of a gasket 2B according to a reference example of the second embodiment in a usage state.

As shown in Fig. 9 and Fig. 10, in the gasket 1B, the cross-sectional shape of a main body portion 11B is a circular or a substantially circular shape, unlike the gasket 1 previously described. In the sealing device according to the present invention, the cross-sectional shape of the main body portion is not limited. In the gasket 1B, the projecting amount of a projecting portion 14B on the other side is greater than the projecting amount of a projecting portion 13B on one side, unlike a projecting portion 23B on one side and a projecting portion 24B on the other side of the gasket 2B of the reference example shown in Fig. 11.

Further, with the gasket 1B according to the second embodiment, similarly to the gasket 1 previously described, when the gasket 1B is mounted in the groove portion 103 in a usage state, the deformation of the projecting portion 13 on one side projecting in the direction in which the pressure P is exerted is suppressed to thus suppress the deformation of the main body portion 11, so that the sealing property can be maintained.

Further, in the gasket 1B, similarly to the gasket 1, since the projecting portion 13B on one side and the projecting portion 14B on the other side are provided, even when the planar shape is a complicated shape as shown in Fig. 1 other than a circular shape, the proper mounting in the groove portion 103 can be performed. Therefore, the gasket 1 can improve the easiness in mounting in the groove portion 103.

The embodiments of the present invention have been described above, but the present invention is not limited to the aforementioned embodiments of the present invention and encompasses any aspects included in the scope of the concept and the claims of the present invention. In addition, each component may be selectively combined, as appropriate, so as to produce at least partially the problems and effects described above. For example, the shape, the material, the arrangement, the size, and the like of each constituent element in the aforementioned embodiments may be changed, as appropriate, depending on the specific aspect of usage of the present invention.

For example, in the gaskets 1, 1A, 1B, 2, and 3 described above, the description has been made assuming that one side in the radial direction is the outer periphery side and the other side is the inner periphery side. However, the sealing device according to the present invention is not limited thereto, and it is only necessary that the projecting portions on one side should project in the direction in which the pressure applied due to a medium present in a space on the other side is exerted, and the projecting portions on the other side should project in the direction opposite to the direction in which the pressure is exerted. In other words, in the sealing device, one side may be the inner periphery side, while the other side may be the outer periphery side.

List of Reference Signs

1, 1A, 1B, 2, 3 sealing device (gasket)
11, 11B main body portion
13, 13A, 23 projecting portion on one side
14, 14A, 24, 34 projecting portion on the other side
100, 101 member
102 joint surface portion
102a upper side sealing surface
103 groove portion
103a outer peripheral wall surface
103b bottom surface portion
103c inner peripheral wall surface
103d lower side sealing surface
111 surface on one side
112 surface on the other side
113 upper surface portion
114 lower surface portion
115 oblique side portion
131, 141 side surface portion
S space
S1, S2 center line

## Claims

1. A sealing device that is formed of an endless elastic body around an axis line and is mounted in an endless space formed by a plurality of members facing each other so as to perform sealing between one side and another side in a radial direction of the endless space, the sealing device comprising:

   a main body portion facing the plurality of members in an axis line direction;
   a projecting portion on the one side projecting from the main body portion toward the one side in the radial direction to face the plurality of members; and
   a projecting portion on the other side projecting from the main body portion toward the other side in the radial direction to face the plurality of members,
   wherein
   a projecting amount of the projecting portion on the other side toward the other side is greater than a projecting amount of the projecting portion on the one side toward the one side.

2. The sealing device according to claim 1, wherein

   the sealing device performs sealing between a space on the one side formed on the one side and a space on the other side formed on the other side,
   the projecting portion on the one side projects toward the one side that is in a direction in which a pressure applied due to a medium present in the space on the other side is exerted, and
   the projecting portion on the other side projects toward the other side that is in a direction opposite to the direction in which the pressure is exerted.

3. The sealing device according to claim 1 or 2, wherein when the projecting amount of the projecting portion on the other side toward the other side is a and the projecting amount of the projecting portion on the one side toward the one side is b, $0 < b/a < 1$ is satisfied.

4. The sealing device according to any one of claims 1 to 3, wherein a center line in the radial direction of the main body portion inside the endless space is positioned on the one side relative to a center line in the radial direction of the endless space.

5. The sealing device according to claim 4, wherein when a distance between the center line in the radial direction of the endless space and the center line in the radial direction of the main body portion inside the endless space is l and a distance from the center line in the radial direction of the endless space to the center line in the radial direction of the main body portion in a case where the main body portion extends along an end portion on the one side in the radial direction of the endless space is lo, $0 < l/lo < 1$ is satisfied.

FIG. 1

FIG. 2

(a)

(b)

FIG. 3

FIG. 4

FIG. 5

FIG. 6

FIG. 7

FIG. 8

FIG. 9

FIG. 10

FIG. 11

## INTERNATIONAL SEARCH REPORT

| | International application No. |
| --- | --- |
| | **PCT/JP2021/017708** |

### A. CLASSIFICATION OF SUBJECT MATTER

*F16J 15/10*(2006.01)i
FI: F16J15/10 T; F16J15/10 C

According to International Patent Classification (IPC) or to both national classification and IPC

### B. FIELDS SEARCHED

Minimum documentation searched (classification system followed by classification symbols)

F16J15/10

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | US 2017/0191764 A1 (HANON SYSTEMS) 06 July 2017 (2017-07-06) paragraphs [0021]-[0036], fig. 1, 4, 9 | 1-5 |
| X | US 2008/0265523 A1 (FREUDENBERG-NOK GENERAL PARTNERSHIP) 30 October 2008 (2008-10-30) paragraphs [0022]-[0024], fig. 1, 2, 4, 7 | 1, 3-5 |
| X | WO 2019/082499 A1 (NOK CORP.) 02 May 2019 (2019-05-02) paragraphs [0002], [0014]-[0020], [0028], fig. 1-2 | 1-5 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 June 2021** | **06 July 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/017708**

| Patent document cited in search report | Publication date (day/month/year) | Patent family member(s) | Publication date (day/month/year) |
|---|---|---|---|
| US 2017/0191764 A1 | 06 July 2017 | (Family: none) | |
| US 2008/0265523 A1 | 30 October 2008 | (Family: none) | |
| WO 2019/082499 A1 | 02 May 2019 | CN 110709631 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005299686 A